# EUROPEAN PATENT APPLICATION

(11) **EP 4 600 986 A1**
(43) Date of publication of application: **13.08.2025**
(21) Application number: 23911390.5
(22) Date of filing: 06.11.2023
(51) Int. Cl.: H01G 4/30

(54) **LAYERED CERAMIC ELECTRONIC COMPONENT**

(30) Priority: 28.12.2022 JP 2022211941
(71) Applicant: Murata Manufacturing Co., Ltd., Nagaokakyo-shi, Kyoto 617-8555 (JP)
(72) Inventor: MISHIMA, Yasuhiro, Nagaokakyo-shi, Kyoto 617-8555 (JP)
(74) Representative: Zimmermann, Tankred Klaus
(86) International application number: PCT/JP2023/039923
(87) International publication number: WO 2024/142606

(57) **Abstract**

Provided is a layered ceramic electronic component 1 with which migration of Ag included in a resin electrode can be suppressed, and thus the occurrence of short-circuits between electrodes can be suppressed. In the layered ceramic electronic component 1, a first external electrode 20 extends to first and second main surface sides, and a second external electrode 21 extends to the first and second main surface sides. Between a first electrically conductive resin layer 34 and a first main surface M1 of a layered body 2, there is a first Ni plated wraparound layer in which a first Ni plated layer 36 is provided. Between the first electrically conductive resin layer 34 and a second main surface M2 of the layered body 2, there is a second Ni plated wraparound layer in which the first Ni plated layer 36 is provided. Between a second electrically conductive resin layer 35 and the first main surface M1 of the layered body 2, there is a third Ni plated wraparound layer in which a second Ni plated layer 37 is provided. Between the second electrically conductive resin layer 35 and the second main surface M2 of the layered body 2, there is a fourth Ni plated wraparound layer in which the second Ni plated layer 37 is provided.

## Description

### TECHNICAL FIELD

The present invention relates to a multilayer ceramic electronic component.

### BACKGROUND ART

One example of a multilayer ceramic electronic component is a multilayer ceramic capacitor. Patent Document 1 is Japanese Unexamined Patent Application, Publication No. H11-162771, which describes a multilayer ceramic capacitor with a resin electrode as an external electrode. The resin electrode includes a thick Cu layer functioning as a base electrode layer, an electrically conductive resin layer, a Ni plated layer, and a Sn plated layer. The electrically conductive resin layer contains an electrically conductive filler and a resin. As the electrically conductive filler, Ag is used. An epoxy resin is used as the resin. A plurality of electrically conductive fillers are brought into contact with each other to maintain electrical conduction in the electrically conductive resin layer.

### Citation List

### Patent Document

Patent Document 1: Japanese Unexamined Patent Application, Publication No. H11-162771

### DISCLOSURE OF THE INVENTION

### Problems to be Solved by the Invention

However, in a conventional resin electrode, when a voltage is applied under high-temperature, in particular, when a voltage is applied in a high-temperature and high-humidity environment, Ag migration may occur. The migrated Ag may be connected between the terminal electrodes. Ag connected between the terminal electrodes may cause a short circuit between the terminal electrodes.

Therefore, an embodiment of the present invention provides multilayer ceramic electronic components that are each able to reduce or prevent migration by a filler material such as Ag contained in a resin electrode, and thus reducing or preventing the occurrence of a short circuit between electrodes.

### Means for Solving the Problems

A multilayer ceramic electronic component according to an embodiment of the present invention includes: a multilayer body including a plurality of dielectric layers and a plurality of internal electrode layers that are laminated, a first main surface M1 and a second main surface M2 opposed to each other in a height direction, a first lateral surface S1 and a second lateral surface S2 opposed to each other in a width direction orthogonal or substantially orthogonal to the height direction, and a first end surface E1 and a second end surface E2 opposed to each other in a length direction orthogonal or substantially orthogonal to the height direction and the width direction, a first external electrode provided on the first end surface, and a second external electrode provided on the second end surface. The plurality of internal electrode layers include
first internal electrode layers each provided on a corresponding one of the plurality of dielectric layers and each exposed at the first end surface,
second internal electrode layers each provided on a corresponding one of the plurality of dielectric layers and each exposed at the second end surface, the first external electrode includes
a first base electrode layer including a metal component,
a first electrically conductive resin layer provided on the first base electrode layer and including a thermosetting resin and a filler,
a first Ni plated layer provided on the first electrically conductive resin layer, and
a first Sn plated layer provided on the first Ni plated layer, the second external electrode includes
a second base electrode layer including a metal component,
a second electrically conductive resin layer provided on the second base electrode layer and including a thermosetting resin and a filler,
a second Ni plated layer provided on the second electrically conductive resin layer, and
a second Sn plated layer provided on the second Ni plated layer,
the first external electrode extends to the first main surface and the second main surface,
the second external electrode extends to the first main surface and the second main surface,
a first Ni plated wraparound layer provided in the first Ni plated layer is provided between the first electrically conductive resin layer and the first main surface of the multilayer body,
a second Ni plated wraparound layer provided in the first Ni plated layer is provided between the first electrically conductive resin layer and the second main surface of the multilayer body,
a third Ni plated wraparound layer provided in the second Ni plated layer is provided between the second electrically conductive resin layer and the first main surface of the multilayer body, and
a fourth Ni plated wraparound layer provided in the second Ni plated layer is provided between the second electrically conductive resin layer and the second main surface of the multilayer body.

### Effects of the Invention

According to the present invention, it is possible to provide multilayer ceramic electronic components that are each able to reduce or prevent migration by a filler material such as Ag contained in a resin electrode, and thus reducing or preventing the occurrence of a short circuit between electrodes.

### BRIEF DESCRIPTION OF THE DRAWINGS

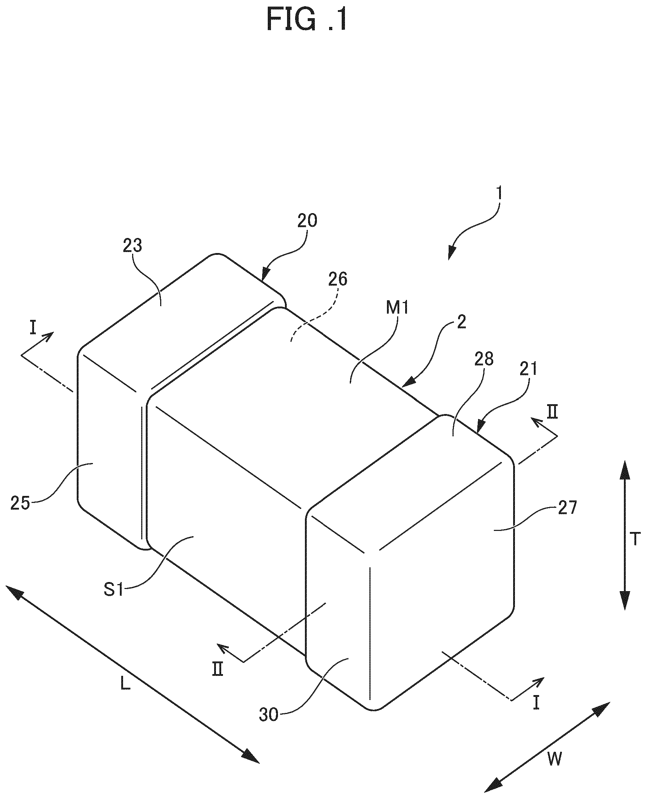

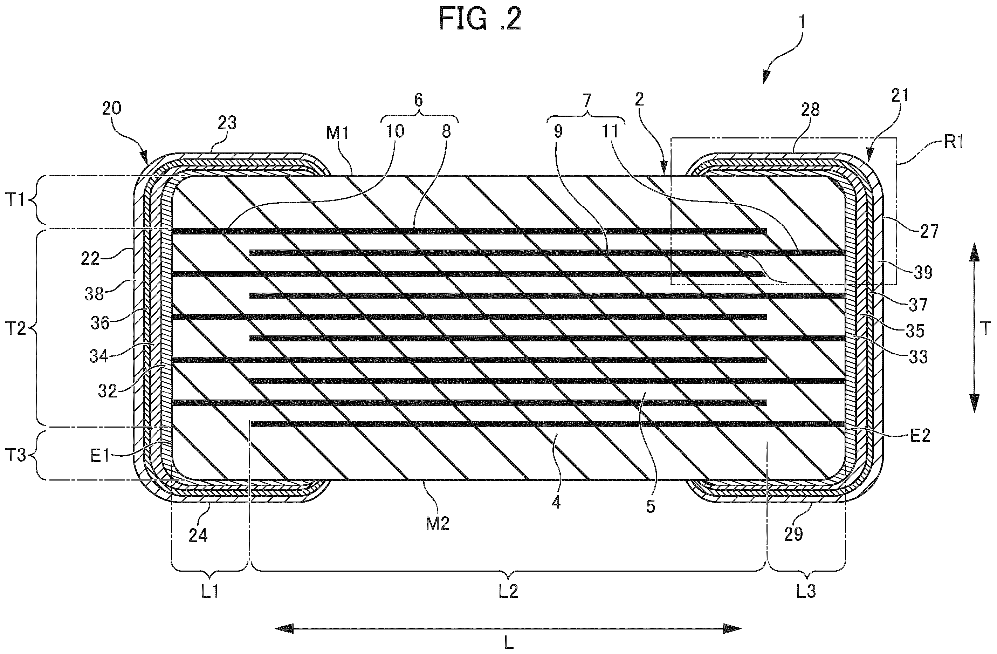

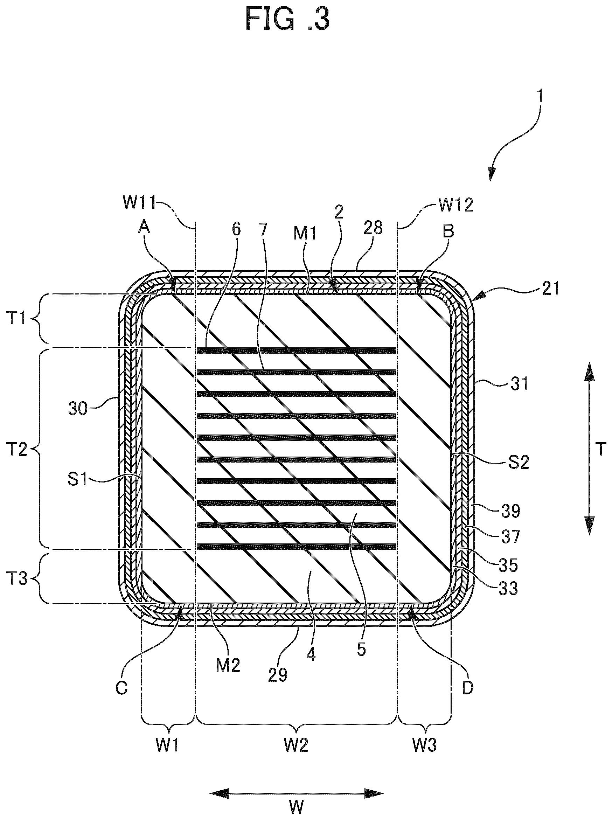

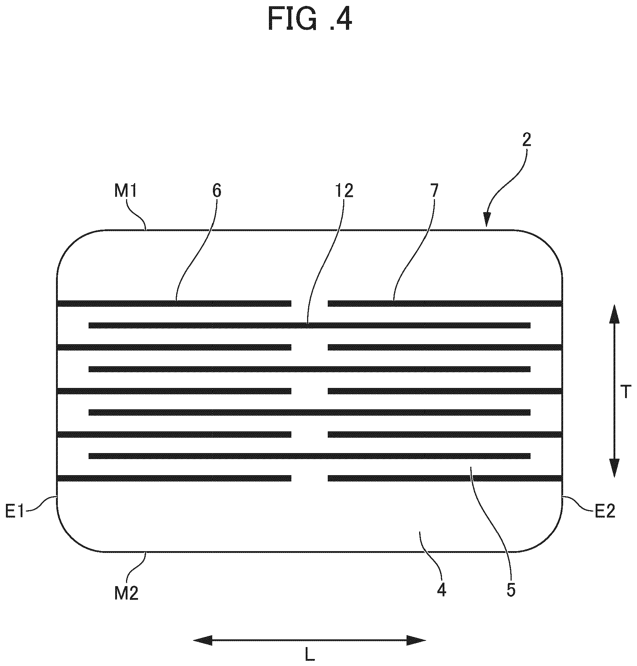

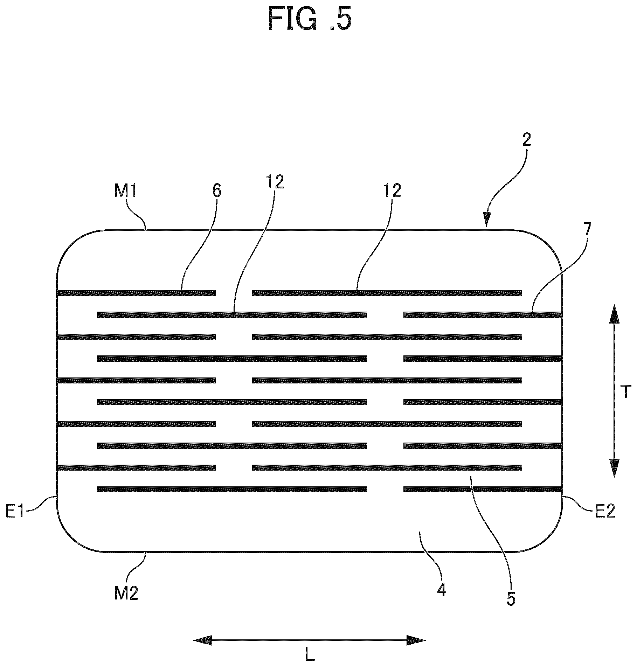

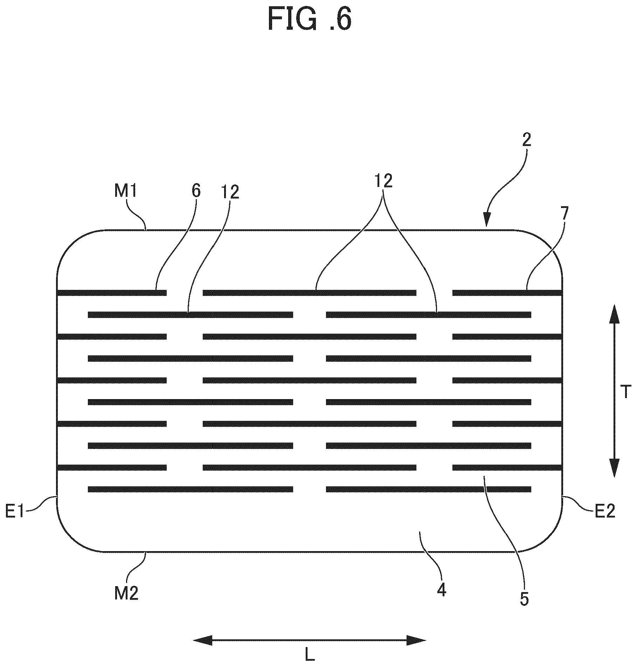

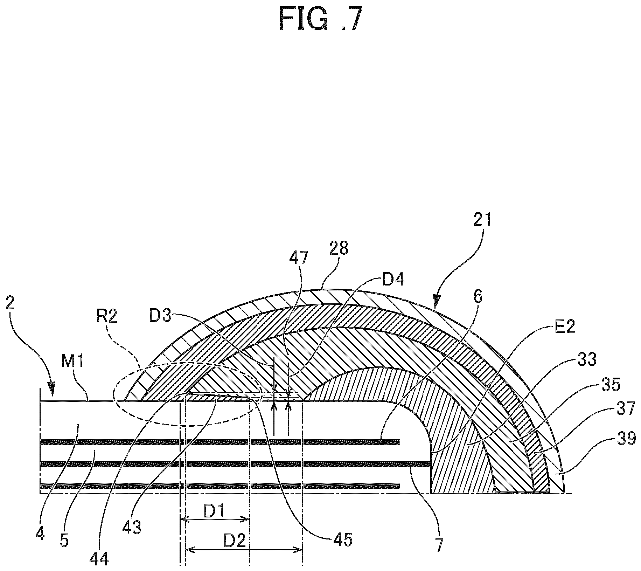

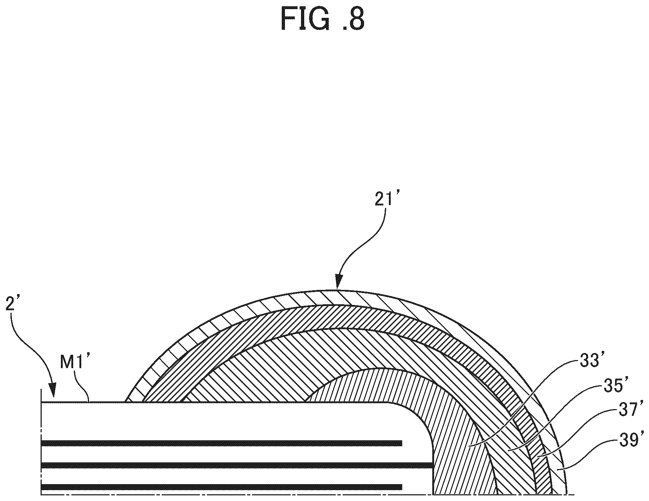

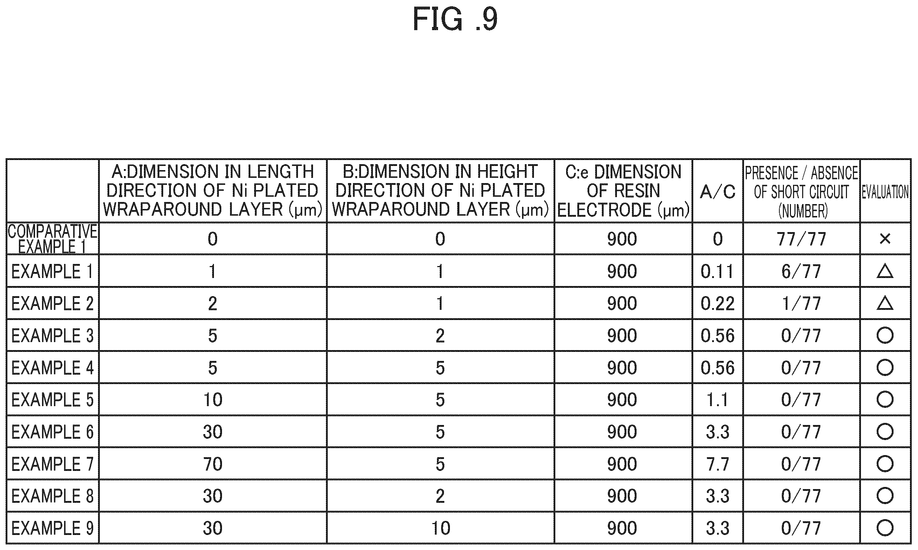

FIG. 1 is a perspective view of a multilayer ceramic capacitor of an embodiment of the present invention. FIG. 2 is a cross-sectional view taken along the line I-I in FIG. 1. FIG. 3 is a cross-sectional view taken along the line II-II in FIG. 1. FIG. 4 is an LT cross-sectional view of a multilayer body showing an example of floating internal electrode layers. FIG. 5 is an LT cross-sectional view of a multilayer body showing an example of floating internal electrode layers. FIG. 6 is an LT cross-sectional view of a multilayer body showing an example of floating internal electrode layers. FIG. 7 is an enlarged view of a region R1 in FIG. 2. FIG. 8 is a view showing a conventional multilayer ceramic capacitor. FIG. 9 is a graph showing characteristics of a multilayer ceramic capacitor.

### PREFERRED MODE FOR CARRYING OUT THE INVENTION

Embodiments of the present invention will be described based on a multilayer ceramic capacitor 1 as an example of a multilayer ceramic electronic component. FIG. 1 is a perspective view of the multilayer ceramic capacitor 1 according to an embodiment of the present invention.

### (Multilayer Body)

The multilayer body 2 includes a plurality of laminated dielectric layers and a plurality of laminated internal electrode layers. The multilayer body 2 has an approximately rectangular parallelepiped shape. In the multilayer body 2, a direction in which the dielectric layer and the internal electrode layer are laminated is defined as a height direction T. A direction orthogonal or substantially orthogonal to the height direction T is defined as a width direction W. A direction orthogonal or substantially orthogonal to the height direction T and the width direction W is defined as a length direction L.

In the multilayer body 2, two surfaces opposed to each other in the height direction T are defined as a first main surface M1 and a second main surface M2, respectively. In the multilayer body 2, two surfaces opposed to each other in the width direction W are defined as a first lateral surface S1 and a second lateral surface S2, respectively. In addition, two surfaces opposed to each other in the length direction L are defined as a first end surface E1 and a second end surface E2. The second main surface M2 is defined as the mounting surface of the multilayer ceramic capacitor 1. The mounting surface is a surface facing a wiring board when the multilayer ceramic capacitor 1 is mounted on the wiring board or the like.

Regarding the cross sections of the multilayer body 2, a cross section taken along the line I-I in FIG. 1 is defined as an LT cross section. A cross section taken along the line II-II in FIG. 1 is defined as a WT cross section.

The multilayer body 2 preferably has rounded corner portions and ridge portions. Each of the corner portions is a portion where three surfaces of the multilayer body 2 intersect with one another. Each of the ridge portions is a portion where two surfaces of the multilayer body 2 intersect with each other. In addition, unevenness or the like may be provided on a portion or all of the main surfaces, the lateral surfaces, and the end surfaces.

### Dielectric layer

The total number of dielectric layers laminated in the multilayer body 2 is preferably about 15 or more and about 200 or less. Each of the dielectric layers is mainly made of a ceramic material. Examples of the ceramic material include a dielectric ceramic made of a main component such as BaTiO₃, CaTiO₃, SrTiO₃, or CaZrO₃. Further, a dielectric ceramic obtained by adding an auxiliary component such as a Mn compound, a Fe compound, a Cr compound, a Co compound, or a Ni compound to these main components may be used as the ceramic material.

In the present embodiment, the multilayer ceramic capacitor 1 will be described in various ways. As described above, the multilayer ceramic capacitor 1 is an example of a multilayer ceramic electronic component. When a piezoelectric ceramic is used for the multilayer body 2, the multilayer ceramic electronic component functions as a ceramic piezoelectric element. Specific examples of the piezoelectric ceramic material include PZT (lead zirconate titanate) ceramic materials.

When a semiconductor ceramic is used for the multilayer body 2, the multilayer ceramic electronic component functions as a thermistor element. Specific examples of the semiconductor ceramic material include spinel ceramic materials.

When a magnetic ceramic is used for the multilayer body 2, the multilayer ceramic electronic component functions as an inductor element. When the multilayer ceramic electronic component functions as an inductor element, the internal electrode layer functions as a coil-shaped conductor. Specific examples of the magnetic ceramic material include a ferrite ceramic material.

The thickness of one dielectric layer is preferably 0.5 µm or more and 10 µm or less.

### Division of Multilayer Body

The division in the height direction T and the length direction L of the multilayer body 2 will be described with reference to FIG. 2. FIG. 2 is a cross-sectional view taken along the line I-I in FIG. 1. The multilayer body 2 can be divided into a first outer layer portion T1, an effective layer portion T2, and a second outer layer portion T3 in the height direction T. The first outer layer portion T1, the effective layer portion T2, and the second outer layer portion T3 are provided in this order from the first main surface M1 toward the second main surface M2 in the height direction T.

The first outer layer portion T1 is a portion between the first main surface M1 and the inner electrode closest to the first main surface M1. The effective layer portion T2 is a portion where the internal electrode and the internal electrode are opposed to each other. The second outer layer portion T3 is a portion between the second main surface M2 and the inner electrode closest to the second main surface M2. The effective layer portion T2 is a portion sandwiched between the first outer layer portion T1 and the second outer layer portion T3.

Specifically, the first outer layer portion T1 is an aggregate of a plurality of dielectric layers located between the first main surface M1 and the internal electrode layer closest to the first main surface M1. Further, the second outer layer portion T3 is an aggregate of a plurality of dielectric layers located between second main surface M2 and the inner electrode layer closest to second main surface M2.

Among the dielectric layers, the dielectric layers provided in the first outer layer portion T1 and the second outer layer portion T3 are defined as outer layer dielectric layers 4. Among the dielectric layers, the dielectric layers provided in the effective layer portion T2 are defined as inner dielectric layers 5.

The dimensions of the multilayer body 2 are not particularly limited. A dimension in the length direction L of the multilayer body 2 is defined as an L dimension. The L dimension is preferably 0.2 mm or more and 10 mm or less. The dimension in the width direction W of the multilayer body 2 is defined as a W dimension. The W dimension is preferably 0.1 mm or more and 10 mm or less. The dimension of the multilayer body 2 in the height direction T is defined as a T dimension. The T dimension is preferably 0.1 mm or more and 5 mm or less.

The division of the multilayer body 2 in the length direction L will be described. The multilayer body 2 can be divided in the length direction L into a first end portion L1, an L counter electrode portion L2, and a second L end portion L3. The first end portion L1, the L counter electrode portion L2, and the second L end portion L3 are provided in this order from the first end surface E1 toward the second end surface E2 in the length direction L.

The L counter electrode portion L2 is a portion where the internal electrode layers are opposed to each other in the height direction **T.** The first end portion L1 is a portion between the L counter electrode portion L2 and the first end surface E1. The second end portion L3 is a portion between the L counter electrode portion L2 and the second end surface E2. The L counter electrode portion L2 is a portion corresponding to the counter electrode portions of the internal electrode layers. The first end portion L1 and the second end portion L3 are portions each corresponding to the extension electrode portions of the internal electrode layers. The counter electrode portions and the extension electrode portions will be described later. The first end portion L1 and the second end portion L3 are also defined as L gaps.

The L counter electrode portion L2 is a portion corresponding to the counter electrode portions of the internal electrode layers. Therefore, the L counter electrode portion L2 is also defined as an inner layer portion.

The division of the multilayer body 2 in the width direction W will be described with reference to FIG. **3.** FIG. 3 is a cross-sectional view taken along the line II-II in FIG. **1****.** The multilayer body 2 can be divided in the width direction W into a first lateral portion W1, a W counter electrode portion W2, and a second W end portion W3. The first lateral portion W1, the W counter electrode portion W2, and the second W end portion W3 are provided in this order from the first lateral surface S1 toward the second lateral surface S2 in the width direction W.

The W counter electrode portion W2 is a portion where the internal electrode layers are opposed to each other in the height direction T. The first lateral portion W1 is a portion between the W counter electrode portion W2 and the first lateral surface S1. The second lateral portion W3 is a portion between the W counter electrode portion W2 and the second lateral surface S2. The first lateral portion W1 and the second lateral portion W3 are also defined as a W gap.

The W counter electrode portion W2 is a portion where the internal electrode layers are provided. Therefore, the W counter electrode portion W2 is also defined as an inner layer portion.

The first lateral portion W1 and the second lateral portion W3 are portions where the internal electrode layers are not present in the height direction T. Specifically, the first lateral portion W1 is a portion including a plurality of dielectric layers located adjacent to the first lateral surface S1 and located between the first lateral surface S1 and an outermost surface W11 of the inner layer portion adjacent to the first lateral surface S1. The first lateral portion W1 is also defined as a first lateral surface-side outer layer portion.

Similarly, the second lateral portion W3 is a portion including a plurality of dielectric layers located adjacent to the second lateral surface S2 and located between the second lateral surface S2 and an outermost surface W12 of the inner layer portion adjacent to the second lateral surface **S2.** The second lateral portion W3 is also defined as a second lateral surface-side outer layer portion.

### Internal Electrode Layer

The internal electrode layers include a plurality of first internal electrode layers 6 and a plurality of second internal electrode layers 7. Each of the plurality of first internal electrode layers 6 is an internal electrode exposed at the first end surface E1. Each of the plurality of second internal electrode layers 7 is an internal electrode exposed at the second end surface E2.

Each of the first internal electrode layers 6 includes a first counter electrode portion 8 opposed to the second internal electrode layer 7, and a first extension electrode portion 10 extending from the first counter electrode portion 8 toward the first end surface E1 of the multilayer body 2. The end portion of each of the first extension electrode portions 10 adjacent to the first end surface E1 extends toward the surface of the first end surface E1 of the multilayer body 2. The end portion of each of the first extension electrode portions 10 extending toward the first end surface E1 is exposed at the first end surface E1.

Each of the second internal electrode layers 7 includes a second counter electrode portion 9 opposed to the first internal electrode layer 6, and a second extension electrode portion 11 extending from the second counter electrode portion 9 toward the second end surface E2 of the multilayer body 2. The end portion of each of the second extension electrode portions 11 adjacent to the second end surface E2 extends toward the surface of the second end surface E2 of the multilayer body 2. The end portion of each of the second extension electrode portions 11 extending toward the second end surface E2 is exposed at the second end surface E2.

The shapes of the first counter electrode portion 8 and the second counter electrode portion 9 are not particularly limited. The shapes of the first counter electrode portion 8 and the second counter electrode portion 9 are preferably rectangular. However, the corner portions of each of the first counter electrode portions 8 and each of the second counter electrode portions 9 may be rounded. Further, the corner portions of each of the first counter electrode portions 8 and each of the second counter electrode portions 9 may be formed obliquely. The oblique formation indicates formation in a tapered shape.

The shapes of each of the first extension electrode portions 10 and each of the second extension electrode portions 11 are not particularly limited. The shapes of each of the first extension electrode portions 10 and each of the second extension electrode portions 11 are preferably rectangular. However, the corner portions of each of the first extension electrode portions 10 and each of the second extension electrode portions 11 may be rounded. The corner portions of each of the first extension electrode portions 10 and each of the second extension electrode portions 11 may be formed obliquely. The oblique formation indicates formation in a tapered shape.

The width of each of the first counter electrode portions 8 and the width of each of the first extension electrode portions 10 may be the same or substantially the same. Alternatively, either one of the width of each of the first counter electrode portion 8 or the width of each of the first extension electrode portions 10 may be formed to be narrower than the other.

Similarly, the width of each of the second counter electrode portions 9 and the width of each of the second extension electrode portions 11 may be the same or substantially the same. Alternatively, either one of the width of each of the second counter electrode portions 9 or the width of each of the second extension electrode portions 11 may be formed to be narrower than the other.

### Floating Internal Electrode Layer

The floating internal electrode layers 12 will be described with reference to FIGS. 4 to 6. Each of FIGS. 4 to 6 is an LT cross-sectional view of the multilayer body 2. FIGS. 4 to 6 show different configurations of the floating internal electrode layers 12. Each of the floating internal electrode layers 12 indicates an internal electrode layer which is not exposed at either of the first end surface E1 and the second end surface E2 in the first internal electrode layer 6 and the second internal electrode layer 7. Both the first internal electrode layer 6 and the second internal electrode layer 7 may include the floating internal electrode layer 12.

The first counter electrode portion 8 or the second counter electrode portion 9 may include a configuration divided into a plurality of portions by including the floating internal electrode layer 12. It is possible for the first counter electrode portion 8 or the second counter electrode portion 9 to include a two-portion configuration, a three-portion configuration, or a four-portion configuration by dividing the first counter electrode portion 8 or the second counter electrode portion 9. FIG. 4 is a diagram showing an example of the two-portion configuration. FIG. 5 is a diagram showing an example of the three-portion configuration. FIG. 6 is a diagram showing an example of the four-portion configuration. In addition, the first counter electrode portion 8 or the second counter electrode portion 9 may include a configuration of four or more portions.

For example, as shown in FIGS. 4 to 6, the first counter electrode portion 8 or the second counter electrode portion 9 includes a configuration in which the first counter electrode portion 8 or the second counter electrode portion 9 is divided into a plurality of portions, such that it is possible to obtain the following advantageous effects. That is, a plurality of capacitor components are provided between the opposing internal electrodes. These capacitor components are connected in series to form the entire capacitor. Therefore, the voltage applied to each capacitor component becomes low. As a result, it is possible to achieve high breakdown voltage of the multilayer ceramic capacitor.

The first internal electrode layers 6 and the second internal electrode layers 7 can be made of an appropriate electrically conductive material such as a metal such as Ni, Cu, Ag, Pd, or Au, or an alloy containing at least one of these metals such as an Ag-Pd alloy.

In the multilayer ceramic capacitor 1 of the present embodiment, capacitance is generated by the first counter electrode portion 8 and the second counter electrode portion 9 opposed to each other with the inner dielectric layer 5 interposed therebetween. As a result, the multilayer ceramic capacitor 1 exhibits the characteristics of a capacitor.

The thickness of each of the first internal electrode layer 6 and the second internal electrode layer 7 is preferably, for example, about 0.2 µm or more and about 2.0 µm or less. The total number of the first internal electrode layer 6 and the second internal electrode layer 7 is preferably about 15 or more and about 200 or less.

### External Electrode

The external electrode includes a first external electrode 20 and a second external electrode 21. The first external electrode 20 is connected to the first internal electrode layers 6. The first external electrode 20 is also provided on a portion of the first main surface M1 and a portion of the second main surface M2, and a portion of the first lateral surface S1 and a portion of the second lateral surface S2 from the first end surface E1.

The first external electrode 20 on the first end surface E1 is defined as a first end surface external electrode 22. The first external electrode 20 on the first main surface M1 is defined as a first main surface external electrode 23. The first external electrode 20 on the second main surface M2 is defined as a first second main surface external electrode 24. The first external electrode 20 on the first lateral surface S1 is defined as a first lateral surface external electrode 25. The first external electrode 20 on the second lateral surface S2 is defined as a first second lateral surface external electrode 26.

The second external electrode 21 is connected to the second internal electrode layer 7. The second external electrode 21 is also provided on a portion of the first main surface M1 and a portion of the second main surface M2, a portion of the first lateral surface S1, and a portion of the second lateral surface S2 from the second end surface E2.

The second external electrode 21 on the first end surface E1 is defined as a second first end surface external electrode 27. The second external electrode 21 on the first main surface M1 is defined as a second first main surface external electrode 28. The second external electrode 21 on the second main surface M2 is defined as a second main surface external electrode 29. The second external electrode 21 on the first lateral surface S1 is defined as a second first lateral surface external electrode 30. The second external electrode 21 on the second lateral surface S2 is defined as a second lateral surface external electrode 31.

The first external electrode 20 includes a first base electrode layer 32, a first electrically conductive resin layer 34, a first inner plated layer 36, and a first outer plated layer 38. The second external electrode 21 includes a second base electrode layer 33, a second electrically conductive resin layer 35, a second inner plated layer 37, and a second outer plated layer 39.

The first base electrode layer 32 and the second base electrode layer 33 each include an electrically conductive metal and a glass component. The first electrically conductive resin layer 34 and the second electrically conductive resin layer 35 each include a metal component and are made of a thermosetting resin. The first inner plated layer 36 and the second inner plated layer 37 may be, for example, Ni plated layers. The first outer plated layer 38 and the second outer plated layer 39 may be, for example, Sn plated layers. Hereinafter, each layer will be described in order.

### Base Electrode Layer

The base electrode layer includes the first base electrode layer 32 and the second base electrode layer 33. The first base electrode layer 32 is provided on a portion of the first main surface M1 and a portion of the second main surface M2, and a portion of the first lateral surface S1 and a portion of the second lateral surface S2 from the first end surface E1. The second base electrode layer 33 is provided on a portion of the first main surface M1 and a portion of the second main surface M2, and a portion of the first lateral surface S1 and a portion of the second lateral surface S2 from the second end surface E2.

The first base electrode layer 32 and the second base electrode layer 33 each include an electrically conductive metal and a glass component. The electrically conductive metal includes, for example, at least one selected from Cu, Ni, Ag, Pd, an Ag-Pd alloy, Au, and the like. The glass component includes at least one selected from B, Si, Ba, Mg, Al, Li, and the like.

A plurality of first base electrode layers 32 and a plurality of second base electrode layers 33 may be provided. The first base electrode layer 32 and the second base electrode layer 33 may be formed by applying an electrically conductive paste containing glass and a metal to a multilayer body, and firing the paste. The firing may be performed simultaneously with firing of the internal electrodes, or may be performed after firing of the internal electrodes. In this way, the first base electrode layer 32 and the second base electrode layer 33 are configured as fired layers.

The thickness of the first base electrode layer 32 in the middle portion in the height direction T of the first base electrode layer 32 located at the first end surface E1 is preferably, for example, about 10 µm or more and about 150 µm or less. Similarly, the thickness of the second base electrode layer 37 in the middle portion in the height direction T of the second base electrode layer 37 located on the second end surface E2 is preferably, for example, about 10 µm or more and about 150 µm or less.

When the first base electrode layer 32 and the second base electrode layer 33 are provided on the first main surface M1 and the second main surface M2, and the first lateral surface S1 and the second lateral surface S2, the thickness of the first base electrode layer 32 or the second base electrode layer 33 in the middle portion in the length direction L of the first base electrode layer 32 or the second base electrode layer 33 located on the first main surface M1 and the second main surface M2, and the first lateral surface S1 and the second lateral surface S2 is, for example, preferably about 5 µm or more and about 50 µm or less.

### Electrically Conductive Resin Layer

The electrically conductive resin layer is provided on the base electrode layer. The electrically conductive resin layer includes a resin component and a metal component. The electrically conductive resin layer includes the first electrically conductive resin layer 34 and the second electrically conductive resin layer 35. The first electrically conductive resin layer 34 and the second electrically conductive resin layer 35 include a thermosetting resin as a resin component. Therefore, the first electrically conductive resin layer 34 and the second electrically conductive resin layer 35 are more flexible than the base electrode layer. This is because the base electrode layer is made of, for example, a plated film or a fired product of a metal component and a glass component.

Therefore, even when a bending stress is applied to the mounting substrate or a physical impact is applied to the multilayer ceramic capacitor, or even when a shock due to thermal cycling is applied to the multilayer ceramic capacitor, it is possible to reduce or prevent the occurrence of cracks in the multilayer ceramic capacitor. This is because the electrically conductive resin layer functions as a buffer layer.

Specific examples of the thermosetting resin contained in the electrically conductive resin layer include various known thermosetting resins such as an epoxy resin, a phenol resin, a urethane resin, a silicone resin, and a polyimide resin. Among them, epoxy resin is one of the most suitable resins. This is because the epoxy resin is excellent in heat resistance, moisture resistance, adhesion, and the like.

The first electrically conductive resin layer 34 is provided on the first base electrode layer 32. Specifically, the first electrically conductive resin layer 34 is provided so as to cover the first base electrode layer 32. The first electrically conductive resin layer 34 includes at least one end portion which is in contact with the multilayer body **2.**

Similarly, the second electrically conductive resin layer 35 is provided on the second base electrode layer 33. Specifically, the second electrically conductive resin layer 35 is provided so as to cover the second base electrode layer 33. The second electrically conductive resin layer 35 includes at least one end portion which is in contact with the multilayer body **2.**

The metal component included in the first electrically conductive resin layer 34 and the second electrically conductive resin layer 35 is preferably a metal filler. The metal component preferably contains Ag. Ag may be Ag alone, or may be an alloy containing Ag.

Ag may be coated on the surface of a metal powder other than Ag. When a metal powder whose surface is coated with Ag is used, Cu, Ni, Sn, Bi, or an alloy powder thereof is preferably used as the metal powder.

When Ag is used as the metal filler, there are the following advantages. That is, Ag has the lowest specific resistance among metals. Therefore, an electrode with low electric resistance can be formed. Since Ag is a noble metal, it is difficult to oxidize Ag. Therefore, the weather resistance of the electrically conductive resin layer can be enhanced. By using Ag as the metal filler, the metal of the base material can be made inexpensively, while maintaining the characteristics of Ag.

The shape of the metal filler included in the first electrically conductive resin layer 34 and the second electrically conductive resin layer 35 is not particularly limited. The shape of the metal filler may be spherical, flat, or the like. The metal filler may be a mixture of spherical metal powder and flat metal powder.

The average particle size of the metal filler included in the first electrically conductive resin layer 34 and the second electrically conductive resin layer 35 is not particularly limited. The average particle size of the metal filler can be, for example, 0.3 µm or more and 10 µm or less. The average particle size of the metal filler included in the electrically conductive resin layer can be obtained by calculation using a laser diffraction particle size measurement method (based on ISO13320). The average particle size can be determined regardless of the shape of the filler.

The metal filler included in the first electrically conductive resin layer 34 and the second electrically conductive resin layer 35 mainly maintains the electrical conductivity of the electrically conductive resin layer. Specifically, when the metal fillers are in contact with each other, a conduction path is formed inside the electrically conductive resin layer.

As described above, examples of the resin included in the first electrically conductive resin layer 34 and the second electrically conductive resin layer 35 include various known thermosetting resins such as an epoxy resin, a phenoxy resin, a phenol resin, a urethane resin, a silicone resin, and a polyimide resin. Among them, an epoxy resin excellent in heat resistance, moisture resistance, adhesion, and the like is one of the most suitable resins.

The first electrically conductive resin layer 34 and the second electrically conductive resin layer 35 preferably include a curing agent together with a thermosetting resin. When an epoxy resin is used as the base resin, various known compounds such as phenols, amines, acid anhydrides, imidazoles, active esters, and amide imides can be used as the curing agent.

The thicknesses of the first electrically conductive resin layer 34 and the second electrically conductive resin layer 35 are preferably, for example, about 10 µm or more and about 200 µm or less.

### Plated Layer

The plated layer will be described. As described above, the plated layer includes the inner plated layer and the outer plated layer. That is, the plated layer includes two layers. However, the plated layer may include a single layer or a plurality of layers.

### Inner Plated Layer

The inner plated layer is provided on the electrically conductive resin layer. The inner plated layer covers at least a portion of the electrically conductive resin layer. The inner plated layer includes a first inner plated layer 36 and a second inner plated layer 37. The first inner plated layer 36 is provided on the first electrically conductive resin layer 34. The second inner plated layer 37 is provided on the second electrically conductive resin layer 35.

The first inner plated layer 36 and the second inner plated layer 37 may be defined as Ni plated layers. By using the Ni plated layers as the inner plated layers, it is possible to prevent the base electrode layer or the like from being eroded by solder when the multilayer ceramic capacitor 1 is mounted.

### Outer Plated Layer

The outer plated layer is provided on the inner plated layer. The outer plated layer covers at least a portion of the inner plated layer. The outer plated layer includes a first outer plated layer 38 and a second outer plated layer 39. The first outer plated layer 38 is provided on the first inner plated layer 36. The second outer plated layer 39 is provided on the second inner plated layer 37.

The first outer plated layer 38 and the second outer plated layer 39 may be defined as Sn plated layers. The Sn plated layer has good solder wettability. Therefore, when the multilayer ceramic capacitor 1 is mounted on a substrate or the like, it is possible to facilitate the mounting by using the Sn plated layers as the outer plated layers.

The metal used as the material of the inner plated layer and the surface plated layer is not limited to the above-described example. The plated layer such as the inner plated layer and the surface plated layer may include at least one selected from metals such as Cu, Ni, Ag, Pd, Au, and Sn, and alloys such as Ag-Pd alloys.

The thickness per one plated layer is preferably 3 µm or more and 9 µm or less.

The ceramic capacitor 1 of the present embodiment is characterized by the inner plated layers. In the following description, the first inner plated layer 36 and the second inner plated layer 37 will be described as the Ni plated layers. Therefore, the first inner plated layer 36 may be defined as a first Ni plated layer 36, and the second inner plated layer 37 may be defined as a second Ni plated layer 37.

In the following description, the first outer plated layer 38 and the second outer plated layer 39 will be described as the Sn plated layers. Therefore, the first outer plated layer 38 may be defined as a first Sn plated layer 38, and the second outer plated layer 39 may be defined as a second Sn plated layer 39.

The Ni plated layer of the present embodiment has a Ni plated wraparound layer. The Ni plated wraparound layer refers to a portion of the Ni plated layer provided between the surface of the multilayer body 2 and the electrically conductive resin layer. This will be described with reference to FIG. 7. FIG. 7 is an enlarged view of a region R1 in FIG. 2. The Ni plated wraparound layer includes the first to fourth Ni plated wraparound layers.

The first Ni plated wraparound layer is a portion of the first Ni plated layer 36 provided between the first electrically conductive resin layer 34 and the first main surface M1 of the multilayer body 2. The second Ni plated wraparound layer is a portion of the first Ni plated layer 36 provided between the first electrically conductive resin layer 34 and the second main surface M2 of the multilayer body 2. The third Ni plated wraparound layer 43 is a portion of the second Ni plated layer 37 provided between the second electrically conductive resin layer 35 and the first main surface M1 of the multilayer body 2. The fourth Ni plated wraparound layer is a portion of the second Ni plated layer 37 provided between the second electrically conductive resin layer 35 and the second main surface M2 of the multilayer body 2.

FIG. 7 shows a third Ni plated wraparound layer 43 among the first to fourth four Ni plated wraparound layers. Hereinafter, the Ni plated wraparound layer will be described by taking the third Ni plated wraparound layer 43 as an example. The first, second, and fourth Ni plated wraparound layers also have the same or substantially the same configuration as the third Ni plated wraparound layer 43.

As shown in a region R2 of FIG. 7, the second Ni plated layer 37 covers the second electrically conductive resin layer 35 and includes the third Ni plated wraparound layer 43 extending on the first main surface M1 toward the second end surface E2.

In the LT cross section, the portion where the second Sn plated layer 39 and the multilayer body 2 are in contact with each other is located closer to the first end surface E1 than the position of a third main surface electrically conductive resin layer 47 closest to the first end surface E1.

In addition, in the LT cross section, the portion where the second Sn plated layer 39 and the multilayer body 2 are in contact with each other is located closer to the first end surface E1 than the position of the third main surface electrically conductive resin layer 47 closest to the first end surface E1.

In addition, in the LT cross section, the portion where the second Sn plated layer 39 and the multilayer body 2 are in contact with each other is located closer to the first end surface E1 than the position of the second Ni plated layer 37 closest to the first end surface E1. That is, the second Sn plated layer 39 does not go around between the second Ni plated layer 37 and the multilayer body 2.

By providing the third Ni plated wraparound layer 43, it is possible to reduce or prevent Ag migration. This will be described below.

The electrically conductive filler contained in the resin electrode contains Ag. The Ag may be ionized when a voltage is applied under a high temperature and when a voltage is applied under a high temperature and high humidity environment. The ionized Ag may react with reactants such as water and halogens to cause Ag migration.

FIG. 8 shows a multilayer ceramic capacitor in which a third Ni plated wraparound layer is not provided. Each of the reference numerals for the associated members is denoted with " ' " in FIG. 8. This distinguishes from the multilayer ceramic capacitor 1 of the present embodiment in which the third Ni plated wraparound layer 43 is provided. The reference numerals for the associated members from which " ' " is removed correspond to the reference numerals for the associated members of the present embodiment.

As shown in FIG. 8, in the multilayer ceramic capacitor in which the third Ni plated wraparound layer was not provided, water or the like easily penetrates into the second electrically conductive resin layer 35' through the interface between the first main surface M1' of the multilayer body 2' and the second Sn plated layer 39' and the interface between the first main surface M1' of the multilayer body 2' and the second Ni plated layer 37'.

On the other hand, the multilayer ceramic capacitor 1 of the present embodiment includes a configuration in which the second electrically conductive resin layer 35 is covered with the third Ni plated wraparound layer 43. Therefore, the ionized Ag is less likely to react with reactants such as water and halogen. As a result, the occurrence of Ag migration is reduced or prevented.

Further, the second electrically conductive resin layer 35 covers the second base electrode layer 33, and a portion of the second electrically conductive resin layer 35 is provided directly on the first main surface M1 of the multilayer body 2. The third Ni plated wraparound layer 43 is provided between the second electrically conductive resin layer 35 provided directly on the first main surface M1 of the multilayer body 2 and the first main surface M1 of the multilayer body 2.

With such a configuration, it is possible to further enhance the advantageous effect of reducing or preventing the occurrence of Ag migration. This facilitates providing the third Ni plated wraparound layer 43 directly on the first main surface M1 of the multilayer body 2. This makes it possible to further reduce or prevent water or the like from reaching the second electrically conductive resin layer 35 while flowing on the first main surface M1 of the multilayer body 2.

The dimensions of the third Ni plated wraparound layer 43 will be described. In the third Ni-plated wraparound layer 43, a portion of the third Ni-plated wraparound layer 43 which starts to extend toward the second end surface E2 on the first main surface M1 is defined as a start edge portion 44. In addition, in the third Ni plated wraparound layer 43, a portion of the third Ni plated wraparound layer 43 at which the extension of the third Ni-plated wraparound layer 43 toward the second end surface E2 ends on the first main surface M1 is defined as an end edge portion 45. The end edge portion 45 corresponds to an end portion of the third Ni plated wraparound layer 43.

FIG. 7 shows the dimension in the length direction L of the third Ni plated wraparound layer 43 as a dimension D1. The dimension D1 is a distance of the third Ni plated wraparound layer 43 in the length direction L from the start edge portion 44 to the end edge portion 45. The dimension D1 is preferably 5 µm or more.

FIG. 7 shows the dimension in the height direction T of the third Ni plated wraparound layer 43 as a dimension D3. The dimension D3 is a distance of the third Ni plated wraparound layer 43 in the height direction T at the start edge portion 44 of the third Ni plated wraparound layer 43. The dimension D3 is preferably 2 µm or more.

By setting the dimension D1 and the dimension D3 of the third Ni plated wraparound layer 43 within the above-described ranges, it is possible to significantly reduce or prevent the occurrence of Ag migration.

By setting the dimension D1 to be a predetermined value or more, it is possible to further reduce or prevent water or the like from reaching the second electrically conductive resin layer 35 while flowing on the first main surface M1 of the multilayer body 2.

By setting the dimension D3 to be a predetermined value or more, it is possible to further reduce or prevent water or the like from passing through the third Ni plated wraparound layer 43 in the height direction T and reaching the second electrically conductive resin layer 35.

FIG. 7 shows the dimension in the length direction L of the third main surface electrically conductive resin layer 47 in the first main surface M1 as a dimension D2. The dimension in the length direction L of the third main surface electrically conductive resin layer 47 on the first main surface M1 indicates a distance in a direction parallel or substantially parallel to the length direction L between a position closest to the first end surface E1 of the third main surface electrically conductive resin layer 47 and a position closest to the second end surface E2 of the portion where the third main surface electrically conductive resin layer 47 is in contact with the first main surface M1, in the LT cross section. The dimension D1 is preferably 56% or more of the dimension D2.

When the dimension D1 is 56% or more of the dimension D2, it is possible to significantly reduce or prevent the occurrence of Ag migration. This is because, by setting the ratio of the dimension D1 to the dimension D2 to a predetermined value or more, it is possible to sufficiently maintain the length of the third Ni plated wraparound layer 43 which is preferable for reducing or preventing the arrival of water or the like at the third main surface electrically conductive resin layer 47.

The thickness of the third Ni plated wraparound layer 43 in the height direction T is preferably thinner as the third Ni plated wraparound layer 43 approaches the second end surface E2 in the length direction L. The dimension in the height direction T of the end edge portion 45 of the third Ni plated wraparound layer 43 is defined as a dimension D4. When the change in the thickness of the third Ni plated wraparound layer 43 has the above-described tendency, the dimension D4 is smaller than the dimension D3.

By reducing the thickness of the third Ni plated wraparound layer 43 in the height direction T as described above, it is possible to significantly reduce or prevent the occurrence of Ag migration. The reduction in the thickness of the third Ni plated wraparound layer 43 near the end edge portion 45 facilitates the improvement of the adhesion between the third Ni plated wraparound layer 43 and the first main surface M1 of the multilayer body 2. This makes it easier to further reduce or prevent the arrival of water or the like at the third main surface electrically conductive resin layer 47.

The configuration of the Ni plated wraparound layer in the width direction W will be described with reference to FIG. 3. As described above, the multilayer body 2 can be divided in the width direction W into the first lateral portion W1, the W counter electrode portion W2, and the second lateral portion W3. Further, as described above, the first lateral portion W1 is also defined as the first lateral surface-side outer layer portion, the W counter electrode portion W2 is also defined as the inner layer portion, and the second lateral portion W3 is also defined as the second lateral surface-side outer layer portion.

The Ni plated wraparound layer is preferably provided on a surface corresponding to the first lateral portion W1 and a surface corresponding to the second lateral portion W3 in the first main surface M1 in the width direction W of the multilayer body 2. Similarly, the Ni plated wraparound layer is preferably provided on a surface corresponding to the first lateral portion W1 and a surface corresponding to the second lateral portion W3 in the second main surface M2 in the width direction W of the multilayer body 2.

FIG. 3 indicates a portion of the first main surface M1 corresponding to the first lateral portion W1 by an arrow A. FIG. 3 also indicates a portion of the first main surface M1 corresponding to the second lateral portion W3 by an arrow B. FIG. 3 also indicates a portion of second main surface M2 corresponding to first lateral portion W1 by arrow C. FIG. 3 also indicates a portion of the second main surface M2 corresponding to the second lateral portion W3 by an arrow D.

As shown by arrows A to D in FIG. 3, in the multilayer ceramic capacitor 1, the Ni plated wraparound layers are provided on the main surfaces of the first lateral surface-side outer layer portion and the second lateral surface-side outer layer portion.

By providing the Ni plated wraparound layer on the main surface indicated by the arrows A to D in FIG. 3, it is possible to more significantly reduce or prevent the occurrence of Ag migration. The main surface of the first lateral surface-side outer layer portion and the main surface of the second lateral surface-side outer layer portion are located in the vicinity of the corner portions of the multilayer body 2. Water or the like is likely to enter between the surface of the multilayer body 2 and the external electrode in the vicinity of the corners portion of the multilayer body 2.

In the multilayer ceramic capacitor 1 according to the present embodiment, the Ni plated wraparound layer is provided in the portion where water or the like is likely to enter. Therefore, it is possible to more significantly reduce or prevent the occurrence of Ag migration.

The dimensions of the multilayer ceramic capacitor 1 are not particularly limited. A dimension in the length direction L of the multilayer ceramic capacitor 1 including the multilayer body 2 and the external electrode is defined as an L dimension. The L dimension is preferably 0.2 mm or more and 10 mm or less. A dimension in the height direction T of the multilayer ceramic capacitor 1 including the multilayer body 2 and the external electrode is defined as a dimension **T.** The T dimension is preferably 0.1 mm or more and 5 mm or less. A dimension in the width direction of the multilayer ceramic capacitor 1 including the multilayer body 2 and the external electrode is defined as a W dimension. The W dimension is preferably 0.1 mm or more and 10 mm or less.

### Method of Manufacturing Multilayer Ceramic Capacitor

An example of a method of manufacturing the multilayer ceramic capacitor 1 will be described.
(1) A dielectric sheet and an electrically conductive paste for manufacturing the internal electrodes are prepared. The dielectric sheet and the electrically conductive paste for manufacturing the internal electrodes include a binder and a solvent. As the binder and the solvent, known organic binders and organic solvents can be used.
(2) The electrically conductive paste for manufacturing the internal electrodes is printed on the dielectric sheet in a predetermined pattern to form an internal electrode pattern. The printing can be performed by, for example, screen printing or gravure printing.
(3) A predetermined number of dielectric sheets for manufacturing the outer layer portion are laminated. No internal electrode pattern is printed on the dielectric sheets for manufacturing the outer layer portion. The dielectric sheets on which the internal electrode pattern is printed are sequentially laminated. Further, a predetermined number of dielectric sheets for manufacturing the outer layer portion are laminated thereon. With such a configuration, a multilayer sheet is manufactured.
(4) A multilayer block is manufactured by pressing the multilayer sheet in the height direction. The pressing is performed by a means such as isostatic pressing.
(5) The multilayer block is cut to a predetermined size. Thus, the multilayer chips are cut out. At this time, the corner portions and the ridge portions of the multilayer chips may be rounded. The rounding can be performed by barrel polishing or the like.
(6) The multilayer chips are fired. Thus, a multilayer body is manufactured. The firing temperature is preferably about 900°C or more and about 1400°C or less. The firing temperature may vary depending on the materials of the dielectric and the internal electrode.

### Base Electrode

(7) An electrically conductive paste functioning as a base electrode is applied to both end surfaces of the multilayer body to form base electrode layers. In the present embodiment, a fired layer is formed as the base electrode layer. When the fired layer is formed, the electrically conductive paste is applied to a predetermined position of the multilayer body. The electrically conductive paste includes a glass component and a metal. Further, application of the electrically conductive paste can be performed by a method such as dipping. After the application, firing treatment is performed to form the base electrode layer. The temperature of the firing treatment at this time is preferably about 700°C or more and about 950°C or less.

### Electrically Conductive Resin Layer

(8) The electrically conductive resin layer is formed on the base electrode layer. In order to form the electrically conductive resin layer, first, an electrically conductive resin paste is prepared. The electrically conductive resin paste includes a resin component and a metal component. The electrically conductive resin paste is applied to the base electrode layer. Application of the electrically conductive resin paste can be performed by a dipping method. After the application, heat treatment is performed at a temperature of about 200°C or more and about 550°C or less. This heat treatment thermally cures the resin. Thus, the electrically conductive electrode layer is formed. The atmosphere during the heat treatment is preferably a nitrogen gas atmosphere. Further, in order to prevent scattering of the resin and oxidation of various metal components, the oxygen concentration is preferably curbed to 100 ppm or less.

(9) After the electrically conductive resin layer is formed, Ni plated layers are formed as the first inner plated layer and the second inner plated layer on the surface of the electrically conductive resin layer. Electrolytic plating can be used as a method of forming the first Ni plated layer and the second Ni plated layer. Barrel plating is preferably used as the plating method.

### Method of Forming Ni Plated Wraparound Layer

An example of a method of forming the Ni plated wraparound layer will be described. However, the method of forming the Ni plated wraparound layer is not limited to this.

Upon the electrically conductive resin layer being formed, by adjusting at least one of the curing temperature and the curing time of the resin, it is possible to control, for example, the shape of a portion of a gap between the electrically conductive resin layer and the multilayer body in which the Ni plated wraparound layer is provided later. For example, when the curing temperature is high and the curing time is long, peeling between the electrically conductive resin layer and the element body, that is, the multilayer body, is likely to be formed. Then, the Ni plated layer enters the peeled portion.

(10) A Sn plated layer is further formed on the Ni plated layer. That is, the first Sn plated layer is formed on the first Ni plated layer, and the second Sn plated layer is formed on the second Ni plated layer. With such a configuration, when the multilayer ceramic capacitor is mounted on a substrate or the like, it is possible to improve the wettability of solder for use in mounting. As a result, it is possible to easily mount the multilayer ceramic capacitor on a substrate or the like. As a method of forming the Sn plated layer, an electrolytic plating method can be used. Barrel plating is preferably used as the plating method.

### Examples

Multilayer ceramic capacitors were manufactured as an example of multilayer ceramic electronic components according to the above-described production method. Then, using the manufactured multilayer ceramic capacitors as samples, characteristics such as the number of occurrences of migration and the number of occurrences of mechanical strength defects were evaluated. The samples and the evaluation conditions were as follows.
- Dimensions of multilayer ceramic capacitor: L × W × T = 1.0 mm × 0.5 mm × 0.5mm
- Ceramic material: BaTiO₃
- Capacitance: 0.01 µF
- Rated voltage: 50 V

### - Configuration of external electrode

(1) Base electrode layer
   Base electrode layer: including Cu as an electrically conductive metal and a glass component
   Thickness of the base electrode layer at the middle portion in the height direction T of the base electrode layer located at each of the first end surface E1 and the second end surface E2: 15 µm
   Thickness of the base electrode layer at the middle portion in the length direction L of the base electrode layer located on each of the first main surface M1, the second main surface M2, the first lateral surface S1, and the second lateral surface S2: 4 µm
(2) Electrically Conductive Resin Layer
   Metal Filler: Ag
   Resin: Epoxy based
   Thermosetting Temperature: 200°C
   Thickness of the electrically conductive resin layer at the middle portion in the height direction of the first electrically conductive resin layer portion located at each of the first end surface E1 and the second end surface E2: 20 µm Thickness of the electrically conductive resin layer at the middle portion in the length direction of the electrically conductive resin layer located on each of the first main surface M1, the second main surface M2, the first lateral surface S1, and the second lateral surface S2: 20 µm
(3) Ni plated Layer
   Thickness of the Ni plated layer at the middle portion in the height direction T of the Ni plated layer located at each of the first end surface E1 and the second end surface E2: 2 µm Thickness of the Ni plated layer at the middle portion in the length direction L of the Ni plated layer located on each of the first main surface M1, the second main surface M2, the first lateral surface S1, and the second lateral surface S2: 2.0 µm
(4) Sn plated Layer
   Thickness of the Sn plated layer at the middle portion in the height direction T of the Sn plated layer located at each of the first end surface E1 and the second end surface E2: 1.5 µm Thickness of the Sn plated layer at the middle portion in the length direction L of the Sn plated layer located on each of the first main surface M1, the second main surface M2, the first lateral surface S1, and the second lateral surface S2: 1.0 µm

### Method of Evaluating Short Circuit due to Ag Migration

A DC voltage of 50 V was applied to the multilayer ceramic capacitors in an environment of a humidity of 90% RH or more and 95% RH or less and a temperature of 85°C, and a wet load test was performed. The test period of time was 4000 hr.

A DC voltage of 50 V was applied to the chips (multilayer ceramic capacitors) after the test under an environment of a humidity of 90% RH or more and 95% RH or less and a temperature of 85°C, and a wet load test was performed. The test period of time was 4000 hr. During this test, the insulation resistance was measured.

When the measured insulation resistance value was 1 × 10⁶Ω or less and dendrite-shaped Ag was precipitated on the first main surface, the second main surface, the first lateral surface, and the second lateral surface, it was determined that a short circuit due to migration of Ag ions occurred. The conditions for measuring the insulation resistance value and observing the appearance were as follows.
- Insulation resistance measurement
   Equipment: IR meter
   Measurement time: 60 seconds
- Appearance observation (confirmation of dendritic precipitates)
   Equipment: metallographic microscope
   Field of view: brightfield or polarization
   Magnification: 500 times
- Appearance observation (Ag Confirmation)
   Equipment: SEM-EDX
   Electron images: backscattered electron
   Acceleration voltage: 15 kV
   Magnification: 2000 times
   Detection element: Ag
Here, in the appearance observation, first, the presence or absence of dendritic precipitates was confirmed by a metallographic microscope. When the presence of a dendritic precipitates was confirmed by a metallographic microscope, whether the precipitates are Ag or not was confirmed by SEM-EDX.

### Evaluation Method of Dimension of Ni Plated Wraparound Layer

Each of the chips was polished in cross section and solidified with resin, and the cross section of the end portion in the W direction of the LT cross section was photographed at a magnification of 5000 times using an SEM. The dimensions of the Ni plated wraparound layer were measured from the photographed images, and the average value was calculated. The length L of each of the chips was 3.2 mm.

The results of the evaluation are shown in FIG. 9. The criteria for the evaluation shown in FIG. 9 were as follows.
- Criteria for evaluation
   o (circle symbol): short-circuit occurred zero times (the number of short-circuit occurrences/the total number = 0/77),
   Δ(triangle symbol): short-circuit occurrence ratio of less than 10% (the number of short-circuit occurrences/the total number = 7/77), x (cross symbol): short circuit occurrence ratio of 10% or more

As shown in FIG. 9, in the samples provided with the Ni plated wraparound layer described above, the occurrence ratio of short circuit was reduced or prevented. In addition, in the samples each having A/C of 0.56 or more, the occurrence ratio of short circuit was further reduced or prevented.

In the multilayer ceramic capacitor 1 of the present embodiment, since the desired Ni plated layer is provided between the electrically conductive resin layer and the main surface of the multilayer body 2, such that the electrically conductive filler included in the resin electrode is coated with Ni plating, when the Ag is ionized by voltage application at a high temperature and voltage application in a high-temperature and high-humidity environment, the ionized Ag cannot react with reactants such as water and halogens. Therefore, it was confirmed that the advantageous effects were obtained in that it was possible to reduce or prevent Ag migration and it was possible to reduce or prevent short circuit between electrodes.

Although embodiments of the present invention have been described above, the present invention is not limited to the above-described embodiments, and various changes and modifications thereto can be made. For example, the Ni plated wraparound layer can also be formed on the lateral surface in the same or substantially the same manner as the main surface described above.
<1>
   A multilayer ceramic electronic component includes:
   a multilayer body including a plurality of dielectric layers and a plurality of internal electrode layers that are laminated, a first main surface M1 and a second main surface M2 opposed to each other in a height direction, a first lateral surface S1 and a second lateral surface S2 opposed to each other in a width direction orthogonal or substantially orthogonal to the height direction, and a first end surface E1 and a second end surface E2 opposed to each other in a length direction orthogonal or substantially orthogonal to the height direction and the width direction,
   a first external electrode provided on the first end surface, and
   a second external electrode provided on the second end surface, in which
   the plurality of internal electrode layers include first internal electrode layers each provided on a corresponding one of the plurality of dielectric layers and each exposed at the first end surface,
   second internal electrode layers each provided on a corresponding one of the plurality of dielectric layers and each exposed at the second end surface,
   the first external electrode includes
   a first base electrode layer including a metal component,
   a first electrically conductive resin layer provided on the first base electrode layer and including a thermosetting resin and a filler,
   a first Ni plated layer provided on the first electrically conductive resin layer, and
   a first Sn plated layer provided on the first Ni plated layer, the second external electrode includes
   a second base electrode layer including a metal component,
   a second electrically conductive resin layer provided on the second base electrode layer and including a thermosetting resin and a filler,
   a second Ni plated layer provided on the second electrically conductive resin layer, and
   a second Sn plated layer provided on the second Ni plated layer,
   the first external electrode extends to the first main surface and the second main surface,
   the second external electrode extends to the first main surface and the second main surface,
   a first Ni plated wraparound layer provided in the first Ni plated layer is provided between the first electrically conductive resin layer and the first main surface of the multilayer body,
   a second Ni plated wraparound layer provided in the first Ni plated layer is provided between the first electrically conductive resin layer and the second main surface of the multilayer body,
   a third Ni plated wraparound layer provided in the second Ni plated layer is provided between the second electrically conductive resin layer and the first main surface of the multilayer body, and
   a fourth Ni plated wraparound layer provided in the second Ni plated layer is provided between the second electrically conductive resin layer and the second main surface of the multilayer body.
<2>
   In the multilayer ceramic electronic component as described in <1>, the first electrically conductive resin layer includes a portion provided directly on the first main surface and directly on the second main surface of the multilayer body, and
   the second electrically conductive resin layer includes a portion provided directly on the first main surface and directly on the second main surface of the multilayer body.
<3>
   In the multilayer ceramic electronic component as described in <1> or <2>, each of the first Ni plated wraparound layer, the second Ni plated wraparound layer, the third Ni plated wraparound layer, and the fourth Ni plated wraparound layer has a dimension in the length direction of 5 µm or more, and a thickness in the height direction of 2 µm or more.
<4>
   In the multilayer ceramic electronic component as described in any one of <1> to <3> above, a percentage of a ratio of a dimension in the length direction of each of the first Ni plated wraparound layer and the second Ni plated wraparound layer to a dimension in the length direction of the first electrically conductive resin layer is 56% or more, and a percentage of a ratio of a dimension in the length direction of each of the third Ni plated wraparound layer and the fourth Ni plated wraparound layer to a dimension in the length direction of the second electrically conductive resin layer is 56% or more.
<5>
   In the multilayer ceramic electronic component as described in any one of <1> to <4> above, a thickness of each of the first Ni plated wraparound layer and the second Ni plated wraparound layer in the height direction becomes thinner as approaching the first end surface in the length direction, and a thickness of each of the third Ni plated wraparound layer and the fourth Ni plated wraparound layer in the height direction becomes thinner as approaching the second end surface in the length direction.
<6>
   In the multilayer ceramic electronic component as described in any one of <1> to <5> above, the multilayer body further includes an inner layer portion in which the plurality of internal electrodes are opposed to each other, a first lateral surface-side outer layer portion including the plurality of dielectric layers located adjacent to the first lateral surface and located between the first lateral surface and an outermost surface of the inner layer portion adjacent to the first lateral surface, and a second lateral surface-side outer layer portion including the plurality of dielectric layers located adjacent to the second lateral surface and located between the second lateral surface and an outermost surface of the inner layer portion adjacent to the second lateral surface, the first lateral surface-side outer layer portion and the second lateral surface-side outer layer portion respectively include a first main surface and a second main surface of the first lateral surface-side outer layer portion and a first main surface and a second main surface of the second lateral surface-side outer layer portion, respectively on the first main surface and the second main surface of the multilayer body, the first Ni plated wraparound layer and the second Ni plated wraparound layer are respectively provided on the first main surface of the first lateral surface-side outer layer portion and the second lateral surface-side outer layer portion, and the second main surface of the first lateral surface-side outer layer portion and the second lateral surface-side outer layer portion, and
   the third Ni plated wraparound layer and the fourth Ni plated wraparound layer are respectively provided on the first main surface of the first lateral surface-side outer layer portion and the second lateral surface-side outer layer portion, and the second main surface of the first lateral surface-side outer layer portion and the second lateral surface-side outer layer portion.

### EXPLANATION OF REFERENCE NUMERALS

1 multilayer ceramic capacitor (multilayer ceramic electronic component)
2 multilayer body
4 outer layer dielectric layer (dielectric layer)
5 inner layer dielectric layer (dielectric layer)
12 floating internal electrode layer
20 first external electrode
21 second external electrode
43 third Ni plated wraparound layer
44 start edge portion of third Ni plated wraparound layer
45 end edge portion of third Ni plated wraparound layer
47 third main surface electrically conductive resin layer

## Claims

1. A multilayer ceramic electronic component comprising:
a multilayer body including a plurality of dielectric layers and a plurality of internal electrode layers that are laminated, a first main surface M1 and a second main surface M2 opposed to each other in a height direction, a first lateral surface S1 and a second lateral surface S2 opposed to each other in a width direction orthogonal or substantially orthogonal to the height direction, and a first end surface E1 and a second end surface E2 opposed to each other in a length direction orthogonal or substantially orthogonal to the height direction and the width direction,
a first external electrode provided on the first end surface, and
a second external electrode provided on the second end surface, wherein
the plurality of internal electrode layers include
first internal electrode layers each provided on a corresponding one of the plurality of dielectric layers and each exposed at the first end surface,
second internal electrode layers each provided on a corresponding one of the plurality of dielectric layers and each exposed at the second end surface,
the first external electrode includes
a first base electrode layer including a metal component,
a first electrically conductive resin layer provided on the first base electrode layer and including a thermosetting resin and a filler,
a first Ni plated layer provided on the first electrically conductive resin layer, and
a first Sn plated layer provided on the first Ni plated layer,
the second external electrode includes
a second base electrode layer including a metal component,
a second electrically conductive resin layer provided on the second base electrode layer and including a thermosetting resin and a filler,
a second Ni plated layer provided on the second electrically conductive resin layer, and
a second Sn plated layer provided on the second Ni plated layer,
the first external electrode extends to the first main surface and the second main surface,
the second external electrode extends to the first main surface and the second main surface,
a first Ni plated wraparound layer provided in the first Ni plated layer is provided between the first electrically conductive resin layer and the first main surface of the multilayer body,
a second Ni plated wraparound layer provided in the first Ni plated layer is provided between the first electrically conductive resin layer and the second main surface of the multilayer body,
a third Ni plated wraparound layer provided in the second Ni plated layer is provided between the second electrically conductive resin layer and the first main surface of the multilayer body, and
a fourth Ni plated wraparound layer provided in the second Ni plated layer is provided between the second electrically conductive resin layer and the second main surface of the multilayer body.

2. The multilayer ceramic electronic component according to claim 1, wherein
the first electrically conductive resin layer includes a portion provided directly on the first main surface and
directly on the second main surface of the multilayer body, and
the second electrically conductive resin layer includes a portion provided directly on the first main surface and
directly on the second main surface of the multilayer body.

3. The multilayer ceramic electronic component according to claim 1 or 2, wherein each of the first Ni plated wraparound layer, the second Ni plated wraparound layer, the third Ni plated wraparound layer, and the fourth Ni plated wraparound layer has a dimension in the length direction of 5 µm or more, and a thickness in the height direction of 2 µm or more.

4. The multilayer ceramic electronic component according to any one of claims 1 to 3, wherein
a percentage of a ratio of a dimension in the length direction of each of the first Ni plated wraparound layer and the second Ni plated wraparound layer to a dimension in the length direction of the first electrically conductive resin layer is 56% or more, and
a percentage of a ratio of a dimension in the length direction of each of the third Ni plated wraparound layer and the fourth Ni plated wraparound layer to a dimension in the length direction of the second electrically conductive resin layer is 56% or more.

5. The multilayer ceramic electronic component according to any one of claims 1 to 4, wherein
a thickness of each of the first Ni plated wraparound layer and the second Ni plated wraparound layer in the height direction becomes thinner as approaching the first end surface in the length direction, and
a thickness of each of the third Ni plated wraparound layer and the fourth Ni plated wraparound layer in the height direction becomes thinner as approaching the second end surface in the length direction.

6. The multilayer ceramic electronic component according to any one of claims 1 to 5, wherein
the multilayer body further includes
an inner layer portion in which the plurality of internal electrodes are opposed to each other,
a first lateral surface-side outer layer portion including the plurality of dielectric layers located adjacent to the first lateral surface and located between the first lateral surface and an outermost surface of the inner layer portion adjacent to the first lateral surface, and
a second lateral surface-side outer layer portion including the plurality of dielectric layers located adjacent to the second lateral surface and located between the second lateral surface and an outermost surface of the inner layer portion adjacent to the second lateral surface,
the first lateral surface-side outer layer portion and the second lateral surface-side outer layer portion respectively include a first main surface and a second main surface of the first lateral surface-side outer layer portion and a first main surface and a second main surface of the second lateral surface-side outer layer portion, respectively on the first main surface and the second main surface of the multilayer body,
the first Ni plated wraparound layer and the second Ni plated wraparound layer are respectively provided on the first main surface of the first lateral surface-side outer layer portion and the second lateral surface-side outer layer portion, and
the second main surface of the first lateral surface-side outer layer portion and the second lateral surface-side outer layer portion, and
the third Ni plated wraparound layer and the fourth Ni plated wraparound layer are respectively provided on the first main surface of the first lateral surface-side outer layer portion and the second lateral surface-side outer layer portion, and
the second main surface of the first lateral surface-side outer layer portion and the second lateral surface-side outer layer portion.
